Europäisches Patentamt

European Patent Office

Office européen des brevets

(19)

(11) Publication number: **0 272 294 B1**

# EUROPEAN PATENT SPECIFICATION

(12)

(45) Date of publication of patent specification: **21.10.92**  (51) Int. Cl.⁵: **C01G 25/06**, //C01G25/02

(21) Application number: **87904014.5**

(22) Date of filing: **05.06.87**

(86) International application number:
**PCT/AU87/00163**

(87) International publication number:
**WO 87/07885 (30.12.87 87/29)**

(54) **PREPARATION OF HYDROLYSED ZIRCONIUM SALT PRECURSORS AND HIGH PURITY ZIRCONIA.**

(30) Priority: **17.06.86 AU 6448/86**

(43) Date of publication of application:
**29.06.88 Bulletin 88/26**

(45) Publication of the grant of the patent:
**21.10.92 Bulletin 92/43**

(84) Designated Contracting States:
**AT BE CH DE FR GB IT LI LU NL SE**

(56) References cited:
**EP-A- 79 458**          **EP-A- 171 736**
**AU-A- 5 397 286**      **AU-A- 5 866 786**
**AU-B- 117 741**         **DD-A- 239 396**
**GB-A- 1 495 267**      **US-A- 3 961 026**
**US-A- 4 283 377**

**CHEMICAL ABSTRACTS, vol. 74, no. 10, 8th
March 1971, page 96, abstract no. 43944f,
Columbus, Ohio, US; & JP-A-70 30 450 (TOA
GOSEI CHEMICAL INDUSTRY CO. LTD)
02-10-1970**

(73) Proprietor: **COMMONWEALTH SCIENTIFIC
AND INDUSTRIAL RESEARCH ORGANISA-
TION
Limestone Avenue
Campbell, Australian Capital Territory
2601(AU)**

(72) Inventor: **HOUCHIN, Martin, Richard
61 Cumberland Road
Pascoe Vale, VIC 3044(AU)**

(74) Representative: **Andrae, Steffen, Dr. et al
Balanstrasse 55
W-8000 München 90(DE)**

METADEX Database, DIALOG SEARCH SERVICE, (Metals Abstracts, American Society for Metals & The Metals Society, London), Accession No. 85-421331, N.V. Baryshaikov et al.: "Production of Zirconium Hydroxide from Basic Sulphate", Abstract No. 948287, Tsvetn. Mef. 1985 (3) 64-65 (Russ.)

Patent Abstracts of Japan, C-197, page 163, JP,A2, 58-151327 (SHIN NIPPON RIKA K.K.) ( September 1983 (08.09.83)

Patent Abstracts of Japan, C-289, page 136, JP,A2, 60-36330 (ONODA CEMENT K.K.) 25 February 1985 (25.02.85)

**Description**

This invention relates to a process for the preparation of zirconium dioxide (zirconia; $ZrO_2$), and is particularly concerned with the preparation of hydrolysed zirconium-containing materials which are useful intermediates in the preparation of zirconium compounds and processes for the preparation of such products.

There is considerable demand for high purity zirconia for use in the electronics industry and in the production of partially stabilized zirconia. Much of the world's supply of zirconia is obtained from the naturally occurring mineral zirconium silicate (zircon; $ZrSiO_4$) and the processes currently used to extract zirconia from zircon in general involve the thermal decomposition of zircon to give zirconia and silica or the chemical decomposition of zircon to give zirconia and derivatives of silica. However, the crude zirconia produced in this manner requires purification by further chemical treatment.

Thermal dissociation of zircon to give a mixture of zirconia and silica offers an economically attractive route to zirconia. The dissociated zircon product can be leached with a strong base such as caustic soda in order to dissolve the silica and leave zirconia or can be leached with a strong acid such as sulphuric acid to dissolve the zirconia and form a zirconium salt leaving undissolved silica. The caustic-leach process produces zirconia which may have a purity as high as 99.5% but needs to be subjected to further chemical processing (typically involving dissolving the zirconia in an acid) to produce high purity zirconia. The acid-leaching process has the advantage of producing an acidic solution of a zirconium salt or a water soluble zirconium salt which may be further processed to produce high purity zirconium compounds including zirconia.

It is known in the art to produce zirconia from zirconium sulphate solution by precipitation of the zirconium as a hydrous zirconium oxide (usually retaining some sulphate) by the addition of a base and calcining the precipitated product. However, in practice it has been found that the precipitates formed in this manner are gel-like and difficult to filter.

GB-A-1 495 267 discloses a process for manufacturing easily filterable basic zirconia carbonate. Said process consists of adding simultaneously into a reaction vessel a solution of zirconium sulphate and an aqueous solution of a carbonate or bicarbonate. The reaction takes place at acid pH.

The objects of the present application are to provide a method of preparing a precipitated hydrated zirconium-containing material from acidic zirconium sulphate solutions, which may be readily collected by filtration, which method gives the precipitated product in a form which, by virtue of its particle size and morphology, is particularly suitable for further processing to produce a commercially acceptable zirconia product, and by which method other compounds (organic and inorganic) can be intimately mixed with, or co-precipitated with the precipitated product.

These objects are achieved by a process for obtaining a hydrolyzed zirconium-containing precipitate from an aqueous zirconium sulphate solution, wherein said solution is combined with a solution of a base selected from ammonia, ammonium hydroxide and sodium hydroxide with thorough and continuous mixing in such a manner that the pH of the combined solutions is maintained at all times in the range 3 to 7, either by adding the solutions simultaneously to a suitable vessel or by mixing them together in a flowing stream, and collecting the precipitate which forms.

Preferably the pH is at all times in the optimum range being about 4 to 6, depending on the particular reaction conditions.

The preferred method of combining the solutions comprises adding the solutions simultaneously to a suitable vessel, which may initially contain a body of water or any other suitable electrolyte or solvent. Alternatively the solutions may be continuously added and mixed together in a flowing stream, e.g., in a tube or other suitably configured vessel or conduit.

Obviously thorough and continuous mixing of the solutions is essential.

The exact nature of the precipitate and the pH at which optimal precipitation occurs will vary with the reaction conditions. Those conditions include the chemical composition of the zirconium sulphate solution (both the absolute concentrations of zirconium and sulphate and their relative ratio), the nature and concentration of the base used to effect precipitation, temperature, agitation intensity, the geometry of the reactor vessel, ionic strength, addition rates, aging and overall solids concentration in the precipitation suspension.

If desired, additives can be intimately incorporated into the product during precipitation either by dissolution in the zirconium sulphate or base solution prior to precipitation, or by simultaneous addition as a separate stream during precipitation. Such additives include inorganic stabilizing compounds which are stabilizers of the metastable phase of $ZrO_2$, e.g. $Y_2O_3$, $Ce_2O_3$, $Al_2O_3$, MgO, CaO or mixtures of any two or more such oxides, and organic surfactants, which may be desirable or useful in subsequent processing steps or in the final product. Inorganic compounds, such as the oxides referred to above, may be added as such or in the form of precursors thereof which are converted into the required compounds during the precipitation reaction and/or subsequent process steps, such as calcination.

The direct result of the simultaneous addition procedure is an amorphous precipitate which still contains considerable sulphate and has a composition corresponding approximately to the empirical formula $[Zr(OH)_{3+x}]_2(SO_4)_{1-x}$, where x is typically 0 to 0.5.

After precipitation has been completed, further base can be added to lower the residual sulphate content of the precipitate. Alternatively the pH of the suspension can be lowered by addition of acid, with consequent dissolution of acid-soluble impurities. The desirable qualities of the precipitate are not destroyed (and in some cases are enhanced) by this further addition of acid or base, providing the pH has been maintained at the specified level during the initial simultaneous addition.

The precipitated product may be easily separated, e.g., by filtration, from the mixed solutions at any desired stage after the simultaneous addition is complete and may then be calcined directly to give a substantially pure zirconia product (some residual sulphate may still be present). The inherent filterability of the product makes it amenable to subsequent washing and, hence, reduction of impurity levels.

The nature of the zirconium sulphate solution is not critical. Solutions obtained by any known sulphate leaching procedure may be used, including the solutions obtained by the procedures described in International Patent Application No. PCT/AU86/00018. Sulphate solutions obtained by dissolving zirconium compounds in water or sulphuric acid solutions may also be used, including the solutions obtained by dissolving compounds described in International Patent Application No. PCT/AU86/00109.

The invention is further described and illustrated in the following non-limiting examples.

Example 1

An acidic zirconium sulphate solution containing 100g/l $ZrO_2$, 120g/l $SO_4$ and 14g/l $NH_3$ at a pH of approx. 1.5, was prepared by dissolving $(NH_4)_2(ZrO)_2(SO_4)_3$ (see International Patent Application No. PCT/AU86/00109). This solution and a 4% w/w ammonia solution were simultaneously added to a stirred $200cm^3$ reservoir of water at such relative rates that the pH of the resulting suspension remained essentially constant at 5.2.

In a standard filtration test, 300g of the above suspension containing 20g $ZrO_2$ filtered in 36 seconds through a 7cm Buchner funnel with two layers of Whatman GF/A glass filter paper.

The dried precipitate contained 20% w/w sulphate.

Example 2

This example shows the effect of varying the pH at which precipitation is carried out.

The procedure described in Example 1 was repeated at various constant pH values. The filtering times recorded using the standard filtering test of Example 1 are tabulated below.

| pH | 3.5 | 3.8 | 4.7 | 5.2 | 5.8 | 6.8 | 7.5 |
|---|---|---|---|---|---|---|---|
| Filtering time (sec) | >300 | 225 | 48 | 36 | 41 | 240 | >300 |

Example 3

This example (which should be compared with Examples 1 and 2) shows the effect of varying solution compositions on the optimum precipitation pH.

An acidic zirconium sulphate solution (200g/l $ZrO_2$, 500g/l $SO_4$, pH approx. 0) and a 31% w/w ammonia solution were simultaneously added to a stirred $500cm^3$ reservoir of water at such relative rates that the pH of the resulting suspension remained essentially constant at the pre-selected value. The standard filtration test used was similar to that in Example 1 except that a 15cm funnel and filter papers were used. Filtering times were measured using 1.81 of a suspension containing 35g/l $ZrO_2$. The filtering times at different pH values are tabulated below.

4

| pH | 3 | 3.5 | 4 | 4.5 | 5 | 7 | 8 | 9 |
|---|---|---|---|---|---|---|---|---|
| Filtering time (min) | >60 | 10 | 4 | 3.5 | 4 | 20 | 25 | 25 |

Example 4 (Comparative Example)

This example shows the effect of adding a zirconium sulphate solution to a pre-existing ammonia solution; compare with Example 3 showing simultaneous addition, in accordance with the invention.

An acidic zirconium sulphate solution (200g/l $ZrO_2$, 500g/l $SO_4$, pH approx. 0) was added to a stirred reservoir containing $500cm^3$ of water and $125cm^3$ of 31% w/w ammonia solution until the suspension pH reached a value of 5. In the standard filtration test described in Example 3, this suspension took 3 hours to filter.

Example 5 (Comparative Example)

This example shows the effect of adding ammonia to a pre-existing zirconium sulphate solution; compare with Example 3 showing simultaneous addition, in accordance with the invention.

A 31% w/w ammonia solution was added to a stirred reservoir containing $500cm^3$ of water and 320g of an acidic zirconium sulphate solution (200g/l $ZrO_2$, 500g/l $SO_4$, pH approx. 0) until the suspension pH reached a value of 5. In the standard filtration test described in Example 3, this suspension took 45 minutes to filter.

Example 6

This example shows the effect of raising the pH, after initial precipitation, on product sulphate levels and filtering time.

The procedure described in Example 1 was used to prepare a suspension at pH 5.2. The pH of the suspension was then raised to a value of 9.2 by further addition of ammonia. In the standard filtration test described in Example 1, the above suspension filtered in 25 seconds.

The dried precipitate contained 4.8% w/w sulphate.

Example 7

This example shows the effect of lowering the pH, after initial precipitation, on filtering time and impurity levels in the product.

The procedure described in Example 3 was used to prepare a suspension at pH 4.5. The pH of the suspension was then lowered to a value of 2.5 by addition of $H_2SO_4$. In the standard filtration test described in Example 3 this suspension took 10.5 minutes to filter.

| Impurities present in pH 4.5 precipitate (ppm) | | | | |
|---|---|---|---|---|
| Y | U | Fe | Ti | Al |
| 1340 | 350 | 240 | 260 | 440 |

| Impurities present in precipitate after pH lowered to 2.5 (ppm) | | | | |
|---|---|---|---|---|
| Y | U | Fe | Ti | Al |
| 380 | 130 | 230 | 260 | 250 |

Example 8

This example shows the use of sodium hydroxide in place of ammonia.

An acidic zirconium sulphate solution (200g/l $ZrO_2$, 500g/l $SO_4$, pH approx. 0) and a 34% w/w NaOH solution were simultaneously added to a stirred $500cm^3$ reservoir of water at such relative rates that the pH of the resulting suspension remained essentially constant at pH 5. In the standard filtration test described in Example 3, this suspension took 4 minutes to filter.

## Example 9

This example shows the coprecipitation of magnesia with zirconia.

An acidic zirconium/magnesium sulphate solution containing 100g/l $ZrO_2$, 3.6 g/l MgO, 120g/l $SO_4$ 14 g/l $NH_3$, and having a pH of approx. 1.5, was reacted with a 4% w/w $NH_3$ solution at pH 5.2 as described in Example 1. The pH of the suspension was then raised to a value of 9.2 by further addition of ammonia. In the standard filtration test described in Example 1, the above suspension filtered in 26 seconds.

After calcination at 1000°C for 2 hours the magnesia doped product contained 3.4% w/w MgO.

## Example 10

This example shows the co-precipitation of yttria with zirconia.

An acidic zirconium/yttrium sulphate solution containing 100g/l $ZrO_2$, 5.5g/l $Y_2O_3$, 120g/l $SO_4$, 14g/l $NH_3$, and having a pH of approx. 1.5, was reacted with a 4% w/w $NH_3$ solution as described in Example 1. In the standard filtration test described in Example 1, the above suspension filtered in 32 seconds.

After calcination at 1000°C for 2 hours, the yttria-doped product contained 3 mole % $Y_2O_3$ and existed substantially in the tetragonal crystalline state.

The product prepared in Example 1, when calcined at 1000°C for 2 hours, existed substantially in the monoclinic crystalline state.

## Example 11

This example shows a pilot plant experiment where in comparison with the preceding Examples,
(i) the overall reaction time was longer,
(ii) the agitation was less intense, and
(iii) the geometry of the reactor vessel was different.
All of these factors combined to give a product of greater filterability.

An acidic zirconium sulphate solution (as described in Example 1) and a 4% w/w ammonia solution were simultaneously added to a gently stirred 250 litre reservoir of water at such relative rates that the pH of the resulting suspension remained essentially constant at 5.2 until an equivalent of 35kg $ZrO_2$ had been precipitated over a period of 90 minutes. In the standard filtration test described in Example 1, the above suspension filtered in 16.5 seconds.

## Example 12

This example shows how the process of the invention can be performed as a continuous process.

An acidic zirconium sulphate solution (as described in Example 1) and a 4% w/w $NH_3$ solution were simultaneously added to a stirred overflow vessel at such relative rates that the pH of the resulting suspension remained essentially constant at 5.2.

The rates of addition of reactant solutions and the volume of the overflow vessel were such that they gave an average residence time of approximately 5 min. In the standard filtration test described in Example 1, the above suspension filtered in 25 sec.

## Claims

1. A process for obtaining a hydrolyzed zirconium-containing precipitate from an aqueous zirconium sulphate solution, characterized in that the solution is combined with a solution of a base selected from ammonia, ammonium hydroxide and sodium hydroxide with thorough and continuous mixing in such a manner that the pH of the combined solutions is maintained at all times in the range 3 to 7, either by adding the solutions simultaneously to a suitable vessel or by mixing them together in a flowing stream, and collecting the precipitate which forms.

2. A process as claimed in claim 1, wherein the pH of the combined solutions is maintained in the range 4 to 6.

**3.** A process as claimed in claim 2, wherein the solutions are combined by adding them simultaneously to a vessel which contains initially a body of water or any other suitable electrolyte or solvent.

**4.** A process as claimed in any one of the preceding claims, wherein during precipitation an inorganic stabilizing compound or an organic surfactant is incorporated into the product, either by dissolution in the zirconium sulphate or base solution prior to precipitation, or by simultaneous addition as a separate stream during precipitation.

**5.** A process as claimed in claim 4, wherein the inorganic stabilizing compound is $Y_2O_3$, $Ce_2O_3$, $Al_2O_3$, MgO, CaO or a mixture of two or more such oxides or precursors thereof.

**6.** A process as claimed in any one of the preceding claims, wherein after precipitation has been completed, further base is added to lower the residual sulphate content of the precipitate.

**7.** A process as claimed in any one of claims 1 to 5, wherein after precipitation has been completed, the pH of the suspension is lowered by addition of acid, with consequent dissolution of acid-soluble impurities.

**Patentansprüche**

**1.** Verfahren zur Gewinnung eines hydrolysierten zirconiumhaltigen Niederschlags aus einer wäßrigen Zirconiumsulfatlösung, gekennzeichnet dadurch, daß die Lösung unter sorgfältigem und anhaltendem Mischen in einer solchen Weise mit einer Lösung einer Base, die ausgewählt ist aus Ammoniak, Ammoniumhydroxid und Natriumhydroxid, kombiniert wird, daß der pH der vereinigten Lösungen zu jeder Zeit im Bereich von 3 bis 7 gehalten wird, und zwar entweder durch Zugabe der Lösungen gleichzeitig in einen geeigneten Behälter oder durch ihr Vermischen in einem fließenden Strom, sowie durch Sammeln des Niederschlags, der sich bildet.

**2.** Verfahren nach Anspruch 1, bei dem der pH der kombinierten Lösungen im Bereich von 4 bis 6 gehalten wird.

**3.** Verfahren nach Anspruch 2, bei dem die Lösungen dadurch kombiniert werden, daß man sie gleichzeitig einem Behälter zusetzt, der ursprünglich eine Menge Wasser oder irgendeinen anderen geeigneten Elektrolyten oder ein anderes geeignetes Lösungsmittel enthält.

**4.** Verfahren nach irgendeinem der vorausgehenden Ansprüche, bei dem während der Fällung in das Produkt eine anorganische Stabilisierverbindung oder ein organisches Tensid inkorporiert wird, und zwar entweder durch Auflösen in der Lösung des Zirconiumsulfats oder der Base vor der Fällung oder durch gleichzeitige Zugabe als ein separater Strom während der Fällung.

**5.** Verfahren nach Anspruch 4, bei dem die anorganische Stabilisierverbindung $Y_2O_3$, $Ce_2O_3$, $Al_2O_3$, MgO, CaO oder eine Mischung aus zwei oder mehr derartigen Oxiden oder Vorläufern davon ist.

**6.** Verfahren nach irgendeinem der vorausgehenden Ansprüche, bei dem nach dem Abschluß der Fällung weitere Base zugesetzt wird, um den Restsulfatgehalt des Niederschlags zu vermindern.

**7.** Verfahren nach irgendeinem der Ansprüche 1 bis 5, bei dem nach dem Abschluß der Fällung der pH der Suspension durch Zugabe von Säure abgesenkt wird, unter dadurch bewirkter Auflösung von säurelöslichen Verunreinigungen.

**Revendications**

**1.** Procédé d'obtention d'un précipité d'hydrolyse contenant du zirconium à partir d'une solution aqueuse de sulfate de zirconium, caractérisé en ce que la solution est mélangée à une solution d'une base choisie entre l'ammoniac, l'hydroxyde d'ammonium et l'hydroxyde de sodium, avec mélange énergique et continu d'une manière telle que pH du mélange de solutions soit maintenu à tout moment dans la plage de 3 à 7, par introduction des solutions simultanément dans un récipient convenable ou par mélange de ces solutions l'une à l'autre dans un courant en écoulement, et séparation du précipité qui se forme.

2. Procédé suivant la revendication 1, dans lequel le pH du mélange de solutions est maintenu dans la plage de 4 à 6.

3. Procédé suivant la revendication 2, dans lequel les solutions sont mélangées par introduction de ces solutions simultanément dans un récipient qui contient initialement un volume d'eau ou de n'importe quel autre électrolyte ou solvant convenable.

4. Procédé suivant l'une quelconque des revendications précédentes, dans lequel, au cours de la précipitation, un stabilisant inorganique ou un surfactant organique est incorporé au produit, par dissolution dans la solution de sulfate de zirconium ou de base avant précipitation, ou par addition simultanée sous forme d'un courant distinct au cours de la précipitation.

5. Procédé suivant la revendication 4, dans lequel le stabilisant inorganique est $Y_2O_3$, $Ce_2O_3$, $Al_2O_3$, MgO, CaO ou un mélange de deux ou plus de deux de ces oxydes ou de leurs précurseurs.

6. Procédé suivant l'une quelconque des revendications précédentes, dans lequel, une fois la précipitation terminée, une quantité supplémentaire de base est ajoutée pour diminuer la teneur résiduelle en sulfate du précipité.

7. Procédé suivant l'une quelconque des revendications 1 à 5, dans lequel, une fois la précipitation terminée, le pH de la suspension est abaissé par addition d'un acide, avec dissolution résultante des impuretés solubles dans l'acide.